Europäisches Patentamt

European Patent Office

Office européen des brevets

(19)

(11) Veröffentlichungsnummer: **0 250 720**

**A1**

(12) **EUROPÄISCHE PATENTANMELDUNG**

(21) Anmeldenummer: **87104484.8**

(22) Anmeldetag: **26.03.87**

(51) Int. Cl.⁴: **B01D 35/18** , F02M 37/22

(30) Priorität: **26.06.86 DE 3621405**

(43) Veröffentlichungstag der Anmeldung:
**07.01.88 Patentblatt 88/01**

(84) Benannte Vertragsstaaten:
**AT BE CH DE ES FR GB IT LI LU NL SE**

(71) Anmelder: **REHAU AG + Co**
**Rheniumhaus**
**D-8673 Rehau(DE)**

(72) Erfinder: **Die Erfinder haben auf ihre**
**Nennung verzichtet**

(54) **Flüssigkeitsfilter.**

(57) Die Erfindung betrifft einen Flüssigkeitsfilter für Dieselkraftstoff oder ähnliche Flüssigkeiten. Der Filter besteht aus einem flüssigkeitsdichten Gehäuse mit Ein-und Auslässen für das Durchflußgut. Im Innenraum des Gehäuses ist das Filterpaket angeordnet. In Teilbereiche des Gehäuses kann von außen eine Filterheizung hineinragen. Das wesentliche Merkmal der Erfindung wird darin gesehen, daß definierte Wandbereiche des Gehäuses selbst als Filterheizungen ausgebildet sind.

*Fig. 2*

EP 0 250 720 A1

# FLÜSSIGKEITSFILTER

Die Erfindung betrifft einen Flüssigkeitsfilter für Dieselkraftstoff oder ähnliche Flüssigkeiten, bestehend aus einem mit Ein-und Auslässen für das Durchflußgut versehen, im übrigen flüssigkeitsdichten Gehäuse mit einem in seinem Innenraum angeordneten Filterpaket, wobei in Teilbereiche des Gehäuses eine von außen beheizbare Filterheizung einsetzbar ist.

Aus dem Europäischen Patent (Anmeldung Nr. 86 10 1497.5) ist ein Flüssigkeitsfilter bekannt, der eine von außen eingesetzte Filterheizung aufweist. Die dort beschriebene Filterheizung sitzt in einer Rohrhülse, welche beim Spritzgießen des Filtergehäuses ausgeformt wird.

Die bekannte Filterheizung ragt in den lichten Freiraum des Filterkerns derart hinein, daß zwischen der Innenwandung des Kerns und der Außenwandung der Filterheizung noch ein genügend großer Ringspalt durchgehend verbleibt, durch den die zu filternde Flüssigkeit hindurchtreten kann.

Bei dieser Art der Filterheizung hat sich als nachteilig herausgestellt, daß die Wasserablauföffnung des Filters nicht mehr mittig angeordnet werden kann, sondern zur Mitte versetzt in das Filtergehäuse eingebracht werden muß. Hierbei können Probleme bei der Ableitung der aus dem Filtermedium abgesonderten Wasseranteile auftreten.

Hier setzt die Erfindung ein, die es sich zur Aufgabe gestellt hat, den Nachteil des bekannten Standes der Technik zu vermeiden und eine Filterheizung anzugeben, bei der das Filtergehäuse auch hinsichtlich der Abführung der ausgesonderten Wasseranteile optimal aufgebaut werden kann.

Erfindungsgemäß wird dazu vorgeschlagen, daß definierte Wandbereiche des Gehäuses selbst als Filterheizungen ausgebildet sind.

Es hat sich hierbei als vorteilhaft herausgestellt, daß in die Wandbereiche des Filtergehäuses leitende Spiralen eingelassen sind. Es kann auch zweckmäßig sein, die leitenden Spiralen direkt auf die zugeordneten Wandbereiche aufzusetzen. Bei den heute zur Verfügung stehenden leitfähigen Kunststoffen kann es ferner von Vorteil sein, daß die Wandungen des Filtergehäuses selbst ganz oder teilweise aus elektrisch leitendem Kunststoff ausgebildet sind.

Mit der erfindungsgemäßen Filterheizung wird das Ausparaffinieren von Dieselkraftstoff absolut verhindert. Dieser Vorteil wird dadurch erzielt, daß die Wandungen des Filtergehäuses beliebig zur Heizung des Durchflußgutes eingesetzt werden können. Diese Möglichkeit ist beim vorhandenen Stand der Technik, wie er durch die Europäische Patentschrift (Anmeldung 86 10 1497.5) definiert ist, nicht in vollem Umfange gewährleistet. Da dort die Filterheizung nur in die Mittelhülse eingesetzt werden kann, können bei großer Kälte außenliegende Teilbereiche der zu filternden Flüssigkeit im ausparaffinierten Zustand verbleiben. Das schädliche Ausparaffinieren von Dieselkraftstoff findet bei Außentemperaturen von ca. -20° C (Sommerdiesel) und ca. ab -30° C (Winterdiesel) statt. Die Filtrierbarkeit des Dieselkraftstoffes wird jedoch schon bei weitaus höheren Temperaturen stark beeinträchtigt, die beim Sommerdiesel zwischen 0 bis -2° liegen und beim Winterdiesel bei -15°. Im Fachausdruck wird dieser Bereich mit dem Begriff "Cold-Filter-Plugging-Point" beschrieben. Da erst der gewegte Kraftstoff paraffiniert, springt in vielen Fällen der Motor zunächst an, um dann nach kurzer Zeit infolge Kraftstoffmangels auszusetzen, weil sich im Filter ein Stopfen aus Paraffin gebildet hat.

Neben der direkten Filterbeheizung nach dem Stand der Technik gibt es Aufwärmsysteme für Dieselkraftstoff bei kalten Temperaturen, die mit elektrischen Leistungen von maximal 150 Watt oder ca. 11 Amp. und den Betrieb mit Sommerdiesel bis -15° C und mit Winterdiesel bis -25° C ermöglichen. Ein Auftauen des eingefrorenen Filters ist mit diesen Systemen nicht möglich.

Durch den erfindungsgemäßen Einsatz der Heizung an der kritischen Stelle des Kraftstoffkreislaufes, nämlich dem Filter selbst, ist bei geringem Energieverbrauch die optimale Sicherstellung der Fahrtüchtigkeit gewährleistet.

Einzelne Ausführungsarten der erfindungsgemäßen Filterheizung sind in der Zeichnung - schematisch dargestellt und näher beschrieben; es zeigt:

Fig. 1 eine zentrale Filterbeheizung im Schnitt

Fig. 2 eine Filterheizung aus den äußeren Wandbereichen im Schnitt

Fig. 3 eine Filterheizung am Boden des Filtergehäuses, eine Filterheizung als Durchlauferhitzer

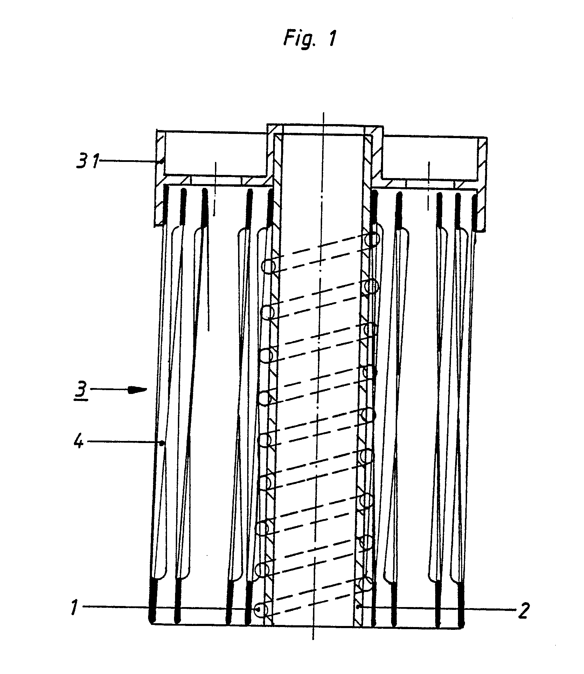

Die in Fig. 1 gezeigte zentrale Filterbeheizung zeigt eine Heizspirale 1, welche von innen um den Kern 2 des Filtergehäuses 3 gewickelt ist. Das Filtergehäuse 3 ist in dieser Darstellung unvollständig gezeigt, d.h. es ist lediglich die Abdeckplatte 31, der Kern 2 und die an Abdeckplatte 3 und Kern 2 befestigte Filterpackung 4 z sehen.

Die Heizspirale 1 kann außer in der Darstellung gezeigten Weise beispielsweise auch aus einer Kreuzwicklung bestehen oder der Heizdraht kann bei der Herstellung des Kerns 2 in dessen Wandung ganz oder teilweise eingebettet sein. Hier lassen sich die nach dem Stand der Technik bekannten Möglichkeiten beliebig anwenden.

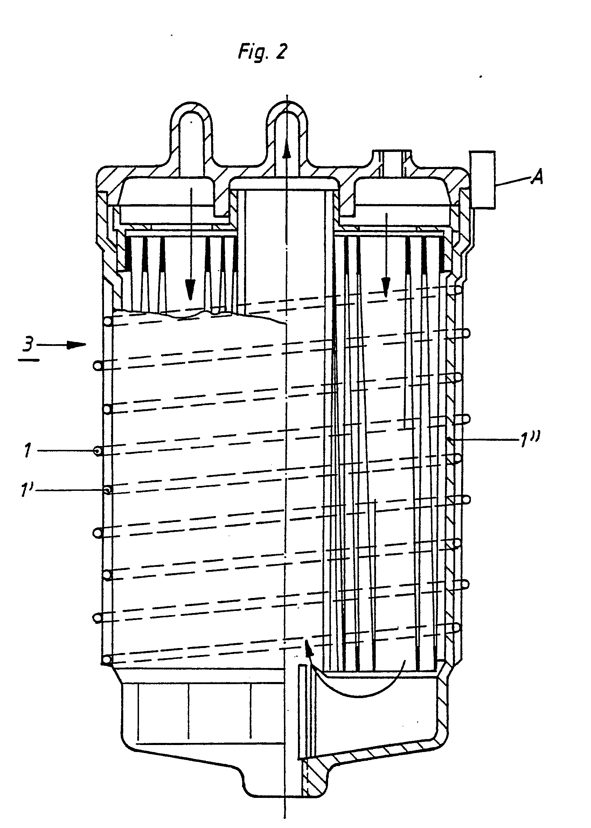

In Fig. 2 sind die Möglichkeiten der Beheizung des Filtergehäuses 3 von außen im einzelnen dargestellt. In der ersten Variante ist die Heizspirale 1 von außen um das Filtergehäuse 3 gewickelt. Die zweite Variante zeigt den Heizdraht 1' als in die Wand des Filtergehäuses ganz oder teilweise eingebrachtes Heizelement, wobei dieses ebenfalls in spiraliger Einbringung gezeigt ist. In beiden Fällen kann auch beispielsweise ein Netzwerk solcher Heizdrähte oder ähnliche Aufbauten verwendet werden. Die dritte Variante der Außenheizung gemäß Fig. 2 zeigt schließlich den Aufbau des Filtergehäuses mit Außenwandungen aus elektrisch leitfähig eingestelltem Kunststoff 1'.

Im Gegensatz zum Aufbau nach Fig. 1 wird bei den Möglichkeiten der Außenbeheizung des Filtergehäuses 3 gemäß Fig. 2 die Wärme von außen um den gefrorenen, d.h. paraffinierten Dieselkern wirksam. Das Auftauen erfolgt also hier von außen nach innen, während umgekehrt im Fall der zentralen Filterbeheizung nach Fig. 1 das Auftauen von innen nach außen erfolgt.

Gegenüber der Tatsache, daß bei der Filterbeheizung gemäß Fig. 1 der elektrische Anschluß für die Heizelemente durch das Filtergehäuse geführt werden muß, vereinfacht sich die Anschlußtechnik bei der Heizungsart gemäß Fig. 2 erheblich. Hier kann die Heizung einfach von außen angelegt werden und das gesamte Filtergehäuse wird gleichmäßig zur Sicherung der vollen Funktionsfähigkeit des Filters erwärmt. Bedingt durch die Wärmeverlust über die Oberfläche wird der Energiebedarf bei einer Filterheizung gemäß Fig. 2 größer als nach einer solchen Heizung, wie sie in Fig. 1 gezeigt ist. Die Heizung nach Fig. 1 hat beispielsweise bei einem relativ hohen Wirkungsgrad einen ebenso relativ niedrigen Energieverbrauch von ca. 75 Watt. Die Heizung nach Fig. 2 benötigt dagegen 100-120 Watt.

In der speziellen Variante der Filterheizung 1', bei der die Außenwandung des Filtergehäuses 3 aus elektrisch leitfähig eingestelltem Kunststoff gebildet ist, wird die Heizungsfunktion durch das gesamte äußere Filtergehäuse selbst übernommen. Die Leitfähigkeit des Kunststoffes wird dem Leistungsbedarf entsprechend gewählt. Über Oberflächenkontakte wird die Spannung zugeführt, wobei innen 12 Volt und außen Masse angelegt wird, so daß zusätzliche Isolierung entfallen kann.

Die Leitfähigkeit liegt in diesem Fall im Bereich von ca. 1000 Ohm cm, während die pro Flächeneinheit umgesetzte Leistung bei ca. 0,3 bis 0,5 Watt pro m³ Oberfläche liegt.

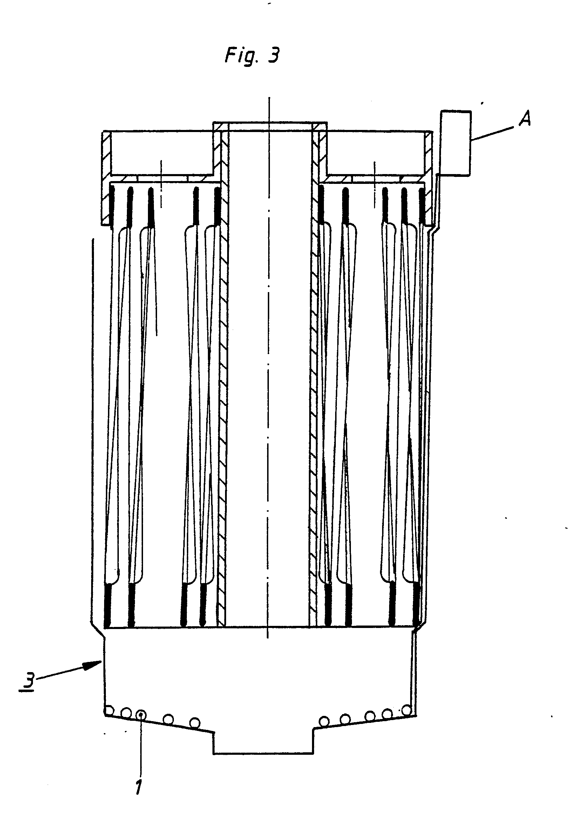

Die Filterheizung gemäß Fig. 3 ist als Spiralheizung 1 am oder im Boden des Filtergehäuses 3 angeordnet. Der Heizanschluß A kann in der gezeigten Form nach oben aus dem Filtergehäuse herausgeführt sein. Hier ist auch jede beliebige andere Anschlußstelle denkbar. Vom Wirkungsgrad her gesehen liegt eine solche Bodenheizung zwischen den Möglichkeiten der in Fig. 1 und Fig. 2 gezeigten Filterheizungen. Auch in diesem Fall kann die Filterheizung 1 auf oder im Boden des Filtergehäuses 3 angeordnet sein, wobei jeweils wieder die Möglichkeiten der Einbringung eines Heizdrahtes, eines Heizgitters oder der Verwendung elektrisch leitender Kunststoffe im unteren Bereich des Filtergehäuses 3 bestehen.

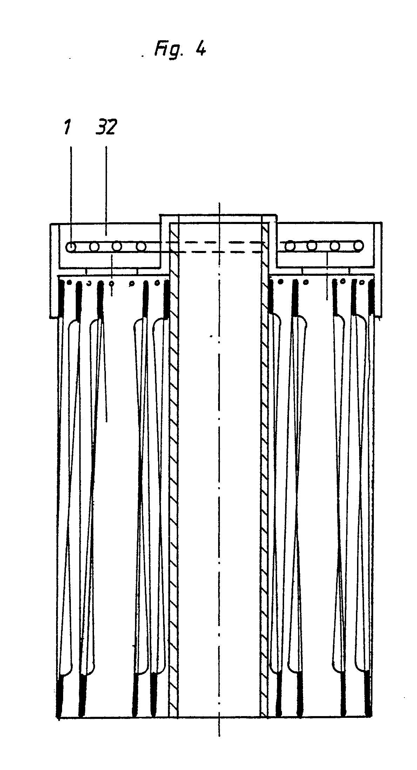

Fig. 4 zeigt schließlich eine Filterheizung als Durchlauferhitzer, wobei die Heizleitung 1 spiralig im Ausnahmeraum 32 der Abdeckplatte 31 angeordnet sein kann. Die Anordnung kann jedoch auch an oder in der Abdeckplatte 31 von außen oder innen erfolgen. Gleichmaßen kann die Abdeckplatte selbst aus elektrisch leitfähigen Kunststoffen gefertigt sein.

Die erfindungsgemäß aufgezeigten Möglichkeiten der Beheizung eines Kraftstofffilters für Diesel können allein oder in Kombination miteinander verwendet werden. Die mit dieser Filterheizung erzielbare höhere Kraftstofftemperatur und geringere Viskosität bewirken eine bessere Verteilung des Kraftstoffs im Zylinder und damit eine bessere Verbrennung.

Damit ergeben sich höhere Ausnutzungsgrade des Kraftstoffes und geringere Verbrennungsrückstände. Mit der erfindungsgemäßen Filterheizung kann der Zusatz von Fließverbesserern zum Dieselkraftstoff entfallen.


**Ansprüche**

1. Flüssigkeitsfilter für Dieselkraftstoff oder ähnliche Flüssigkeiten, bestehend aus einem mit Ein-und Auslässen für das Durchflußgut versehen, im übrigen flüssigkeitsdichten Gehäuse mit einem in seinem Innenraum angeordneten Filterpaket, wobei in Teilbereiche des Gehäuses eine von außen eingesetzte Filterheizung ragt, dadurch gekennzeichnet, daß definierte Wandbereiche des Gehäuses selbst als Filterheizungen ausgebildet sind.

2. Flüssigkeitsfilter nach Anspruch 1, dadurch gekennzeichnet, daß in die Wandbereiche leitende Spiralen eingelassen sind.

3. Flüssigkeitsfilter nach Ansprüchen 1 und 2, dadurch gekennzeichnet, daß die leitenden Spiralen direkt auf die Wandbereiche aufgesetzt sind.

4. Flüssigkeitsfilter nach Anspruch 1, dadurch gekennzeichnet, daß die Wandungen des Gehäuses selbst ganz oder teilweise aus elektrisch leitendem Kunststoff bestehen.

Fig. 1

## Fig. 2

*Fig. 3*

A

3

1

## Fig. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-2 564 905  (J.H. GRAND) <br> * Seite 2, Zeilen 32-35; Seite 3, Zeilen 1-10 * | 1,2 | B 01 D  35/18 <br> F 02 M  37/22 |
| | --- | | |
| X | GB-A-2 114 409  (A. ENTWISTLE) <br> * Seite 1, Zeilen 86-102; Figur 2 * | 1,3 | |
| | --- | | |
| X | DE-U-8 513 541  (H. ROLAND) <br> * Schutzanspruch 1 * | 1,3 | |
| | --- | | |
| X | BE-A-  894 412  (INNOVATIONS ET DIFFUSION) <br> * Seite 1 * | 1,3 | |
| | --- | | **RECHERCHIERTE SACHGEBIETE (Int. Cl.4)** |
| X | FR-A-2 478 204  (SCIASCIA) <br> * Seite 1, Zeilen 14-19 * | 1,3 | |
| | --- | | B 01 D <br> F 02 M |
| X | FR-A-2 501 790  (CHANGARNIER et al.) <br> * Seite 3, Zeilen 1-4 * | 1,3 | |
| | --- | | |
| X | EP-A-0 045 707  (A. DIRY et al.) <br> * Seite 6, Zeilen 1-8 * | 1,2 | |
| | --- | | |
| E | EP-A-0 198 414  (LACREX BREVETTI) <br> * Seite 3, Zeilen 5-15 * | 1 | |
| | --- -/- | | |

Der vorliegende Recherchenbericht wurde für alle Patentansprüche erstellt.

| Recherchenort | Abschlußdatum der Recherche | Prüfer |
|---|---|---|
| DEN HAAG | 12-06-1987 | KERRES P.M.G. |

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-3 443 717 (R. BOSCH GmbH) <br> * Seite 1, Anspruch 1 * | 1,3 | |
| A | EP-A-0 155 839 (TEXAS INSTRUMENTS) <br> * Seite 12, Zeilen 1-26 * | 1 | |
| A | DE-A-3 118 251 (SCHENK FILTERBAU) <br> * Seite 15, Abschnitt 1 * | 1,4 | |

RECHERCHIERTE SACHGEBIETE (Int. Cl.4)

Der vorliegende Recherchenbericht wurde für alle Patentansprüche erstellt.

| Recherchenort | Abschlußdatum der Recherche | Prüfer |
|---|---|---|
| DEN HAAG | 12-06-1987 | KERRES P.M.G. |